# EUROPEAN PATENT APPLICATION

(11) **EP 4 722 048 A1**
(43) Date of publication of application: **08.04.2026**
(21) Application number: 24203867.7
(22) Date of filing: 01.10.2024
(51) Int. Cl.: B60R 21/2334

(54) **SUPPORT FOR AIRBAG**

(71) Applicant: Volvo Car Corporation, 405 31 Göteborg (SE)
(72) Inventor: Rutelin, Sebastian, SE-405 31 Göteborg (SE); Hübinette, William, SE-405 31 Göteborg (SE); Saslecov, Venti, SE-405 31 Göteborg (SE)
(74) Representative: Nederlandsch Octrooibureau

(57) **Abstract**

An airbag support for an unconventional steering wheel (22) comprises a rigid support element (26) moveable between a first position and a deployed position where the rigid support element is positioned to support a deployed airbag (24); and an actuation mechanism configured to move the rigid support element from the first position to the deployed position upon actuation.

## Description

### Technical Field

The present disclosure relates generally to supports for airbags, specifically for a driver airbag deployed in alternative steering wheel configurations.

### Background

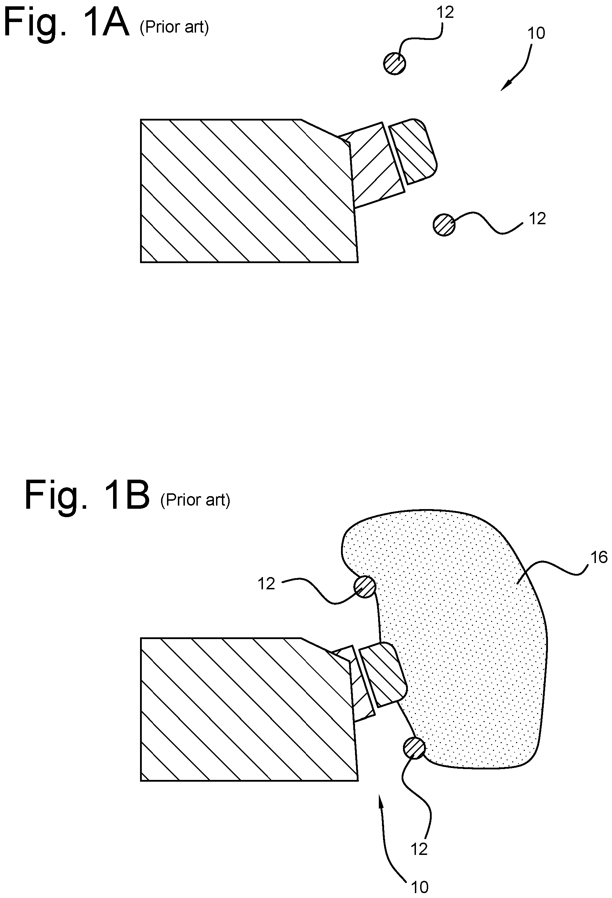

Typically, in the event of a collision, where the driver airbag is deployed - the upper part of the steering wheel rim acts as a support for the driver airbag cushion in a conventional steering wheel shape. This is shown in Figs. 1A-1B, showing a schematic cross-sectional view of a prior art steering wheel 10 with rim 12 in Fig. 1A, and the same cross-sectional view of the prior art steering wheel in Fig. 1B with an airbag 16 deployed and being supported by the upper part of the steering wheel rim 12.

There is a trend within the automotive industry to go for steering wheel shapes that are not round. Several original equipment manufacturer's have started testing and using shapes where the upper portion of the rim is partially or completely removed, which is at least partially enabled by steer by wire technology that no longer requires the steering wheel to be turned to the same extent as in conventional or mechanical steering systems. These types of steering wheel shapes can enable better visibility for the driver, as well as interior sensing systems, such as eye tracking cameras, etc. However, when removing the upper portion of the rim of the steering wheel, a large part of the airbag support is eliminated.

### Summary of Invention

According to a first aspect, an airbag support for an unconventional steering wheel comprises a rigid support element moveable between a first position and a deployed position where the rigid support element is positioned to support a deployed airbag; and an actuation mechanism configured to move the rigid support element from the first position to the deployed position upon actuation. Such an unconventional steering wheel can, for example, have part of the rim (e.g., an upper part of the rim) removed, which can enable better visibility for the driver, and allow for more interior sensing systems, such as eye tracking cameras, etc.

The first position could be, for example, a position in which the rigid support element is an integrated part of the interior, for example, part of or aligned with the dashboard, steering column and/or shroud. When a collision is initiated, the actuation mechanism actuates to move the rigid support element from the first position to a deployed position in which it will support an optimal, or close to optimal, shape of a deployed airbag. When the airbag cushion then interacts with the rigid support element, the airbag cushion is better able to stay in place, properly restraining the occupant despite the unconventional steering wheel.

According to an embodiment the rigid support element moves from the first position to the deployed position via a hinge. This can be a direct or indirect hinged connection to the dashboard or other vehicle component (e.g., steering column, steering wheel, rail). By using a hinge connection, rigid support element can easily, quickly and controllably move from the first (integrated) position to the deployed position.

According to an embodiment, the actuation mechanism comprises a rail and a connecting member connecting the rigid support element to the rail. The connecting member is arranged to slide along the rail, thereby moving the rigid support element from the first position to the deployed position when the airbag support is actuated. Using a rail and a connecting member can provide a simple but controllable movement path for the rigid support element to move into a deployed position for properly supporting an inflated airbag cushion.

According to an embodiment, the rigid support element comprises a first portion pivotably connected to a second portion. Each of the first portion and the second portion are connected to the rail (e.g., rotatably connected). At least one portion is slidable along the rail as well. The first portion and the second portion can be roughly equal in size, or can differ depending on the ideal deployed position, configuration of the rail, etc. In the first position, the first portion is substantially planar with the second portion, and in the deployed position the first portion is at an angle from the second portion. Such an embodiment can allow for the rigid support element to be easily integrated with the vehicle interior components in the first position, with the first and second portions laying side by side, for example, aligned with the dashboard. When the actuation mechanism is triggered to deploy the rigid support element, the first portion can slide along the rail towards the second portion, causing the first and second portions to form an angle at their pivoted connection. This can then place second portion into a position for supporting an airbag cushion, with first portion supporting the second portion.

According to an embodiment, the rigid support element is aligned with a top surface of a dashboard and/or steering column of the vehicle in the first position. Alternatively, the rigid support element could be aligned with another vehicle component, such as a shroud. Such alignment helps to integrate the rigid support element into the vehicle interior, thereby keeping an aesthetically pleasing interior design, but ensuring the rigid support element is available for quick deployment when needed.

According to an embodiment, the actuation mechanism is a mechanical actuation mechanism and the rigid support element is moved from the first position to the deployed position based on an initiation trigger, for example a physical initiation trigger. Optionally, the rigid support element is connected to a vehicle component, and the initiation trigger is movement of a vehicle component. Such a mechanical actuation mechanism means that actuation is triggered by a physical movement or mechanical change in one or more vehicle components triggering actuation. For example, the initiation trigger can be related to a movement, collapsing or deformation of the steering column, which generally occurs during a collision or other event in which the airbag cushion should deploy. Thus, the movement, compaction or deformation of the steering column can trigger the actuation of the rigid support element from its first position to the deployed position, thereby providing a reliable but simple way of initiating the movement of the rigid support element from its first position to its deployed position.

According to an embodiment, the actuation mechanism comprises one or more of: a wire connected between the rigid support element and the vehicle component; an arm linking the rigid support element and the vehicle component, a portion of the vehicle component which interacts with a part of the rigid support element, a pretensioned spring, a pneumatic system and a hydraulic system; and wherein the initiation trigger is movement of the vehicle component causing the rigid support element to move to the deployed position. Optionally, the vehicle component is a steering column. The arm could, for example, be a rigid arm rotatably connected between the rigid support element and the vehicle component. The shape and/or configuration could in some embodiments be used to ensure that the rigid support element is moved into the correct positioning for support of a deployed airbag. For example, the rigid support element and vehicle component could have complementary shaped parts which interact with each other to move the rigid support element into position upon the movement of the vehicle component. The steering column is typically designed to deform or at least partially collapse during a collision, and thus provides a simple mechanical way of triggering the deployment of rigid support element by the actuation system. Such options can all provide reliable ways of ensuring that the rigid support element is quickly, controllably and effectively actuated into a deployed position when needed.

According to an embodiment, the actuation mechanism is a sensor-controlled actuation system, and comprises one or more of: a pretensioned spring; a pneumatic system, a hydraulic system, a pyrotechnic mechanism, an airbag or a pressurized vessel. Such a pre-tensioned spring, pneumatic system, hydraulic system, pyrotechnic mechanism, airbag and/or pressurized vessel could be used alone or with in combination to hold the rigid support element in its first position and/or to move the rigid support element into a deployed position upon actuation. The actuation system is triggered by a signal from the vehicle's detection system for protection during collision, such as a Supplemental Restraint System ("SRS") system. The signal is sent to the actuation system, which initiates the deployment of the rigid support element from the first position. For example, pretensioned springs, bands or wires; a pneumatic or hydraulic system; deflated airbag or pressurized vessel could be positioned with respect to the rigid support element in the first position. When the actuation system receives a signal that there has been or there will be a collision, an initiation trigger releases/activates them to move the rigid support element into its deployed position upon actuation. The initiation trigger could be a pyrotechnic trigger which, for example, releases the pretensioned spring or causes an airbag to inflate, thereby moving the rigid support element into its deployed position for supporting an airbag cushion.

According to an embodiment, the rigid support element is a plate. The plate can be differently sized and/or configured depending on the steering wheel, airbag, other vehicle components, etc. Such a plate can be easily integrated into the vehicle in the non-deployed (first) state, allowing for a more desirable aesthetic, while still able to provide sufficient support for an airbag cushion in a deployed position.

According to an embodiment, the unconventional steering wheel comprises an interrupted rim. The rigid support element is configured, in the deployed position, to support the airbag in the interrupted portion of the rim. As mentioned in the background, interrupted rims on steering wheels are becoming more common as they can help to enable better visibility for the driver as well as other interior sensing systems such as eye trackers or other sensors. The rigid support element can be quickly and reliably deployed into a proper position for providing support for the airbag similar to the support of the full rim in a vehicle with a conventional steering wheel, thereby enabling the use of steering wheels with interrupted rims while ensuring the airbag can be safely deployed and supported in the event of a collision.

According to a further aspect, an unconventional steering wheel arrangement comprises the airbag support as previously described. This allows for the use of an unconventional steering wheel with a standard airbag, while providing the necessary support to ensure it functions safely.

According to a further aspect, a vehicle comprises the unconventional steering wheel arrangement described. Such a vehicle, with an unconventional steering wheel arrangement can allow for better driver visibility and other sensing systems without compromising on airbag support.

According to a further aspect, a method of supporting an airbag deployment in a vehicle with an unconventional steering wheel comprises receiving an initiation trigger, and as a result of receiving the initiation trigger, triggering an actuation mechanism to move a rigid support element from a first position where the rigid support element is integrated into the vehicle interior to a deployed position where the rigid support element is positioned to support a deployed airbag. Integrated into the vehicle interior can be, for example, aligned with a top surface or other portion of the dashboard, steering column or another vehicle component where it is not generally visible to the driver or passengers as a separate part. This can provide an aesthetically pleasing first position while ensuring the rigid support element is accessible and easily and quickly deployable when needed.

The person skilled in the art will understand that the features described above may be combined in any way deemed useful. Moreover, modifications and variations described in respect of the system may likewise be applied to a method.

### Brief Description of Drawings

Figure 1A illustrates a schematic cross-sectional view of a prior art steering wheel; and
Figure 1B illustrates a schematic cross-sectional view of the prior art steering wheel of Fig. 1A with an airbag deployed;
Fig. 2A illustrates a perspective view of a steering wheel with an upper part of the rim removed;
Fig. 2B illustrates a schematic cross-sectional view of the steering wheel of Fig. 2A;
Fig. 2C illustrates a schematic cross-sectional view of the steering wheel of Fig. 2A with an airbag deployed and supported by a a rigid support element;
Figs. 3A-14B illustrate schematic cross-sectional embodiments for the rigid support element, illustrating a first position in Figs. 3A, 4A, 5A, 6A, 7A, 8A, 9A, 10A, 11A, 12A, 13A and 14A, and the deployed position in Figs. 3B, 4B, 5B, 6B, 7B, 8B, 9B, 10B, 11B, 12B, 13B and 14B, respectively.

### Description of Embodiments

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

The term "vehicle" as used herein refers to a thing used for transporting people or goods. Automobiles, cars, trucks, or buses etc. are examples of vehicles. The vehicle may be two or more wheeled vehicles manufactured for use primarily on public streets, roads, etc.

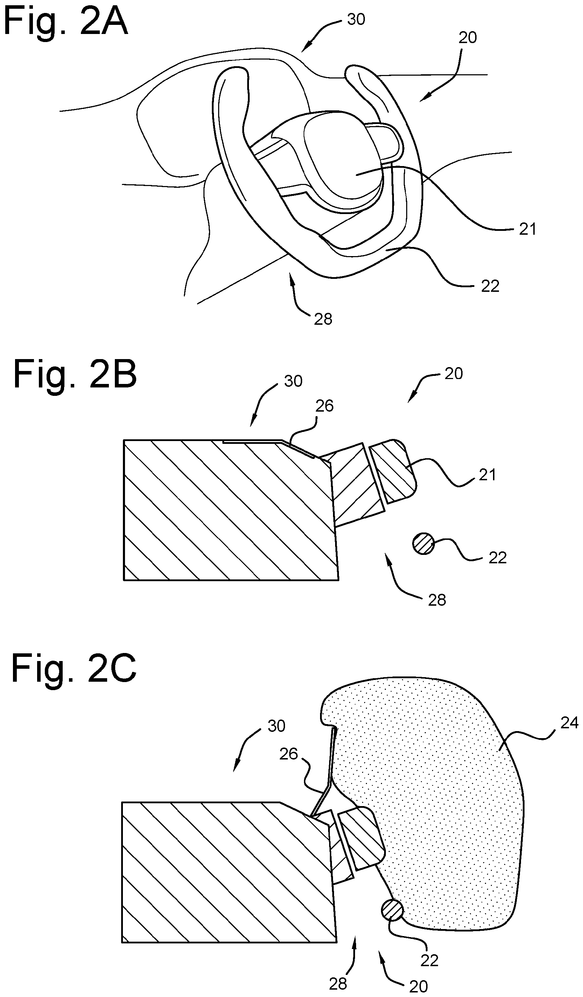

Fig. 2A illustrates a perspective view of steering wheel 20 with an upper part of the rim 22 removed and connected to steering column 28 and dashboard 30; Fig. 2B a illustrates a schematic cross-sectional view of steering wheel 20; and Fig. 2C illustrates a schematic cross-sectional view of steering wheel 20 with an airbag 24 deployed and supported by a a rigid support element 26. The skilled person will appreciate that the various embodiments of rigid support elements of unconventional steering wheels, as disclosed herein, may have to be designed in view of the particular implementation. For example, to prevent that the unconventional steering wheel, particularly when being turned as far to the right or left as possible, also referred to as a full lock turn, interferes with the movement of the rigid support element upon actuation, the length of the rigid support element, or the width of the support element in relation to the space formed by the removed rim 22 of the unconventional steering wheel, has to be designed and dimensioned in respect to one another. Such implementation specific design considerations must be configured in view of implementation specific details such as for example, relevant embodiment of the disclosure, maximum turning angle of the steering wheel, how much of the rim that is removed for the particular implementation of an unconventional steering wheel in question, etc.

Dashboard 30 (also referred to as dash or instrument panel) is located directly ahead of the driver or operator of the vehicle, and typically includes visual display of various data related to the vehicle (e.g., speed, charge or gas level, etc.).

Steering column 28 is a shaft that connects steering wheel 22 to the rest of the steering mechanism of the vehicle (which controls the direction of vehicle movement, not shown). Steering column 28 typically extends through dashboard 30, and can be moveable and/or partially deformable (e.g., collapsible) in the event of a force load (e.g., frontal collision) to move the steering wheel 20 towards the dashboard 30.

Steering wheel 20 is rotatably fixed at an end of steering column 28, and includes center portion 21 and rim 22. As can be seen in Fig. 2A, an upper portion of rim 22 is removed.

Figs. 2A-2B show the steering wheel 20 connected to the steering column 28 under normal conditions. Fig. 2B then shows the same system after a collision which has collapsed part of the steering column to move the steering wheel 20 toward the dashboard 30, and in which airbag 24 has been deployed and is being supported by the rigid support element 26. As can be seen rigid support element 26, in this case depicted as a plate, extends from the dashboard 30 to support an upper part of airbag 24, which in prior art systems was supported by an upper part of the rim.

As discussed in the background, vehicles are moving to alternative steering wheel configurations, particularly where part or all of the upper portion of the steering wheel rim is removed. As can be seen from prior art Fig. 1B, the upper part of the rim of the steering wheel (in a conventional prior art steering wheel configuration) provides much of the support for airbag 16, particularly in places where the driver may impact the airbag 16 in the event of being thrown forward in a collision. When removing the upper portion of the rim, a big part of the airbag support is eliminated.

By providing rigid support element 26, which moves from a first position (e.g., aligned with dashboard 30) to the deployed position shown in Fig. 2C, airbag 24 can be properly supported despite the alternative steering wheel 20 configuration. This allows for using the alternative steering wheel configuration (with part or all of the upper rim removed), which can enable better visibility for the driver, and allow for other interior sensing systems such as eye tracking cameras, etc. This also allows for the use of a conventional airbag 24 with an unconventional steering wheel.

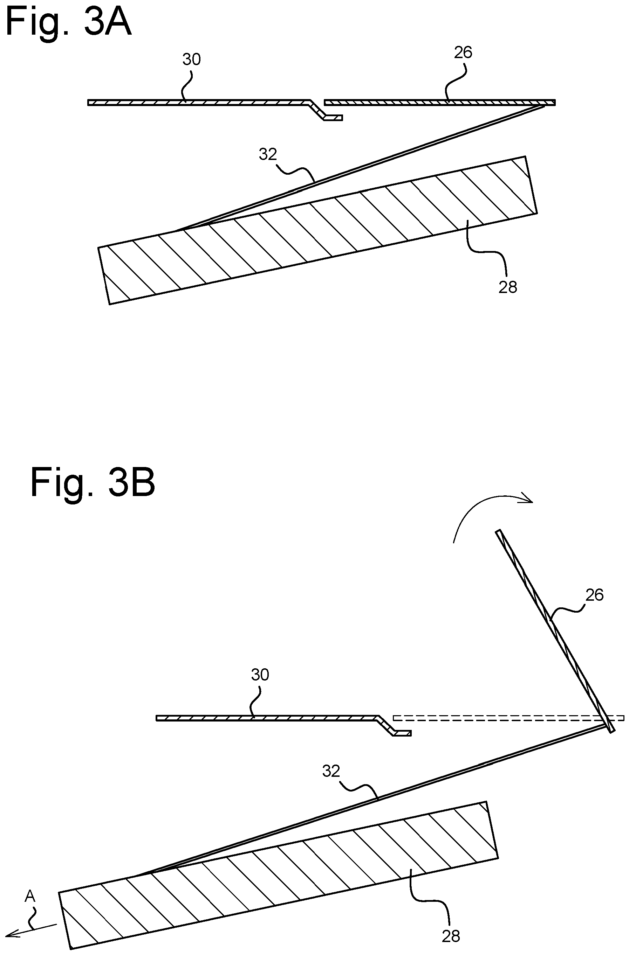

Figs. 3A-7B illustrate schematic cross-sectional embodiments for the rigid support element 26, illustrating a first position in Figs. 3A, 4A, 5A, 6A and 7A; and a deployed position in Figs. 3B, 4B, 5B, 6B and 7B, respectively. The embodiments shown in Figs. 3A-7B all move from the first position to the deployed position by a mechanical actuation mechanism with a physical initiation trigger. This means that a physical movement of a vehicle component (e.g., the steering column 28, as seen in Figs. 2A-2B) causes the actuation and deployment of the rigid support element 26 to move from its first position to the deployed position in which it can support an airbag 24.

Figs. 3A-3B show an embodiment where rigid support element 26 is aligned with dashboard 30 in the first position (Fig. 3A), and connects to steering column 28 through a wire 32. One end of wire 32 is fixed to steering column 28 and an opposite end of wire 32 is fixed to rigid support element 26. Upon movement or deformation of steering column 28 (indicated by arrow A), an end of wire 32 moves with steering column 28, pulling on the other end of wire 32 (fixed to rigid support element 26). This causes rigid support element 26 to hinge upward to the deployed position for supporting airbag 24, as shown in Fig. 3B.

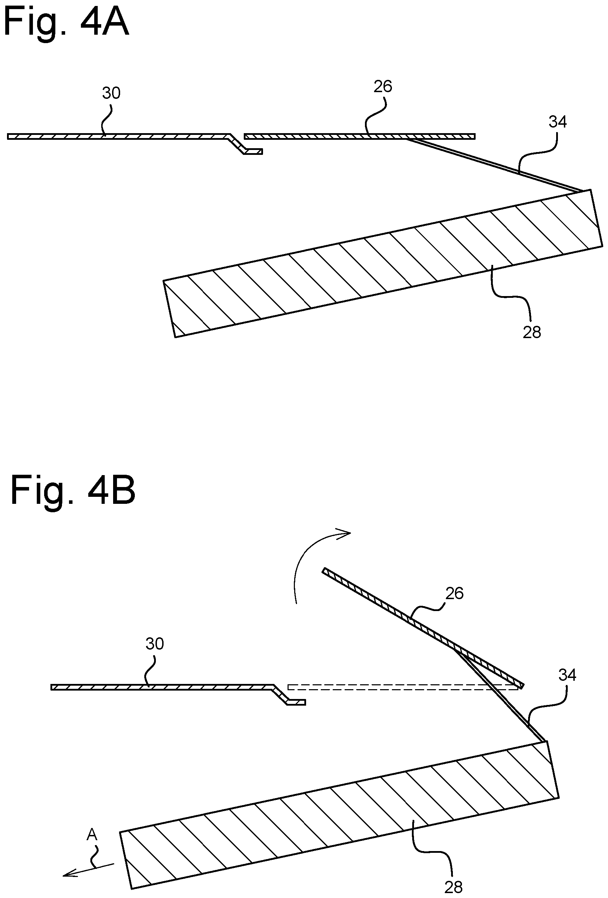

Figs. 4A-4B show an embodiment where rigid support element 26 is also aligned with dashboard 30 in the first position (Fig. 4A). Rigid support element 26 is connected to steering column 28 by a linked arm 34. When steering column 28 moves or deforms in the direction of arrow A, linked arm 34 causes rigid support element 26 to move to its deployed position shown in Fig. 4B for supporting airbag 24.

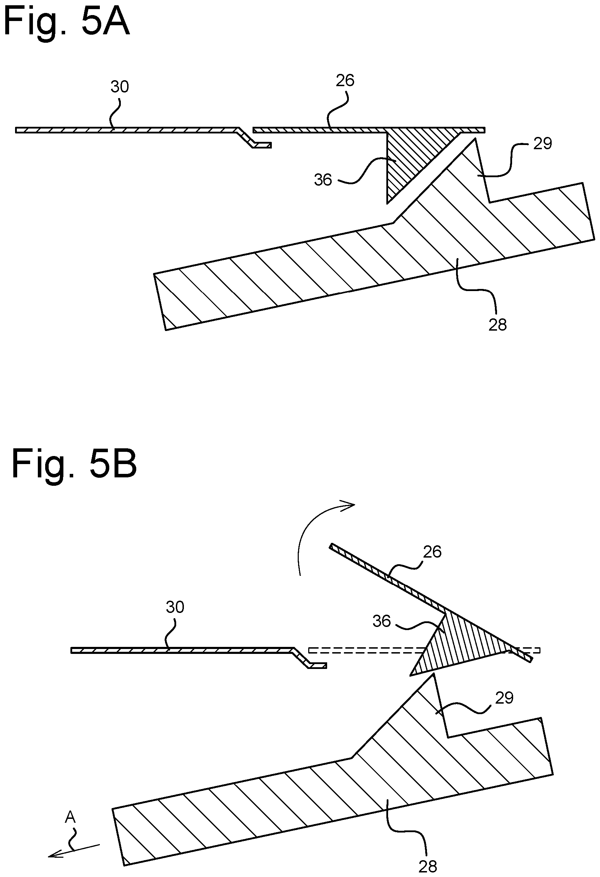

Figs. 5A-5B show an embodiment where the relative shapes of steering column 28 and rigid support element 26 cause actuation and deployment of rigid support element 26 upon physical movement of steering column 28. As can be seen in Fig. 5A, rigid support element 26 includes a wedge shape 36 which is complementary in shape to wedge 29 of steering column 28. When steering column 28 moves in the direction of arrow A, wedge 29 interacts with wedge 36 of rigid support element 26 to move rigid support element 26 into the deployed position for supporting airbag 24.

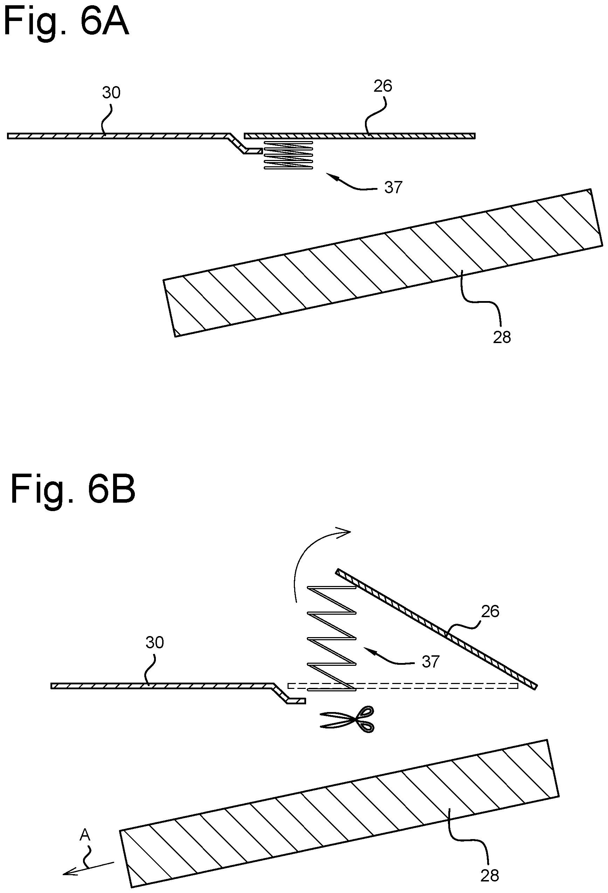

Figs. 6A-6B show an embodiment in which a pretensioned spring element 36 is used. The rigid support element 26 is adjacent to pretensioned spring element 36 in the first position, as shown in Fig. 6A. When steering column 28 moves or deforms towards arrow A, the pretensioned spring element 36 is cut or released, and rigid support element 26 is forced into a rotational movement to move into a deployed position for supporting airbag 24. While a spring is shown and described, such a system could include bands, wires or other suitable components.

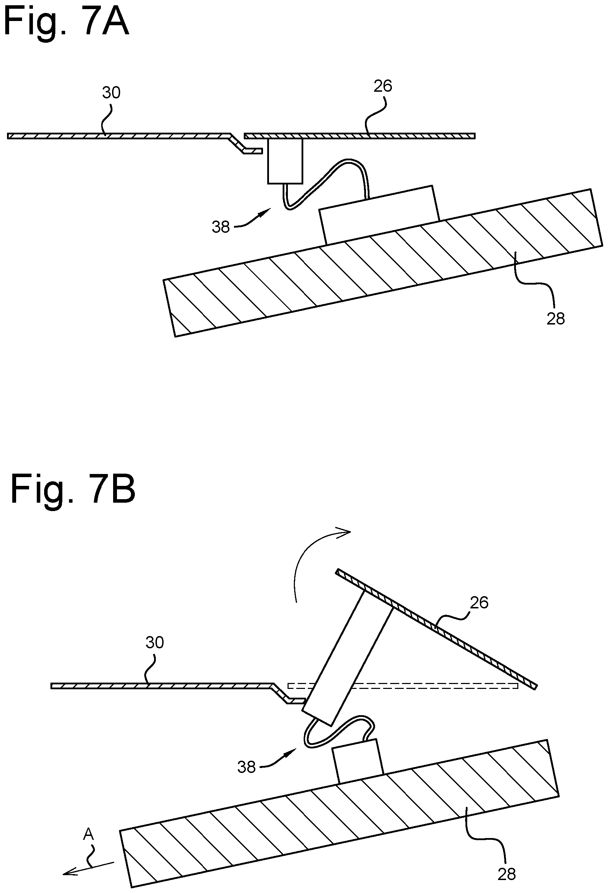

Figs. 7A-7B show an embodiment which uses a pneumatic or hydraulic system 38 to initiate the movement of rigid support element 26 from the initial position aligned with dashboard 30 in Fig. 7A to the deployed position shown in Fig. 7B. Generally, pneumatic systems rely on fluid power by means of pressurized gas, for example air, whereas hydraulic systems rely on fluid power by means of a pressurized liquid, for example oil or water. For the present disclosure, both pneumatic and hydraulic systems are valid options, For example, one of the cylinders is compressed during movement of steering column 28, and the pressure is transferred through a tube that moves rigid support element 26 into the deployed position.

Such systems shown in Figs. 3A-7B use the physical movement or deformation of steering column 28 to deploy rigid support element 26 from its initial position where it is integrated or aligned with the dashboard 30 or other vehicle components to the deployed position where rigid support element 26 can support airbag 24. By using a physical initiation trigger and directly connecting that to the actuation and deployment, rigid support element 26 reliably deploys when the vehicle is subject to crash forces in which airbag 24 deployment is required. Additionally, tying the actuation and trigger to a physical movement of the vehicle provides for an overall more compact and simple system as actuation does not require separate vehicle systems or mechanisms.

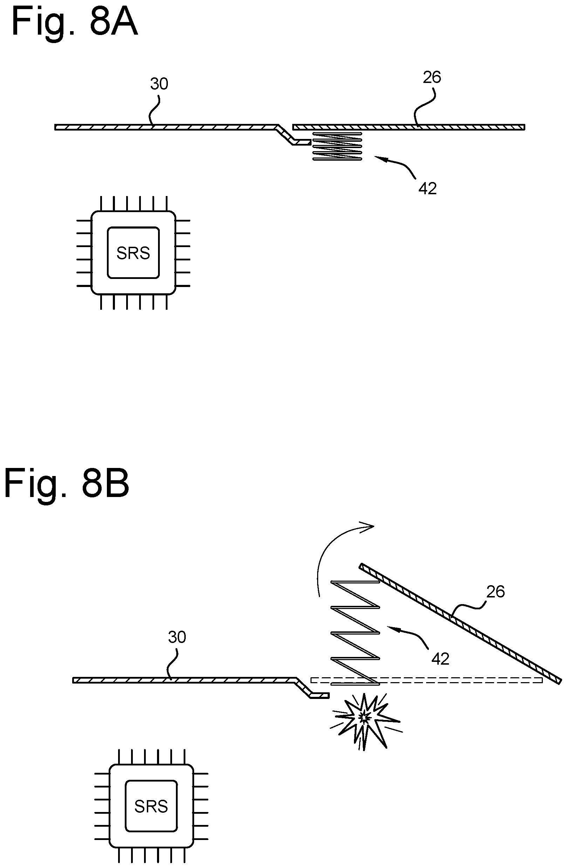

Figs. 8A - 10B illustrate schematic cross-sectional embodiments for the rigid support element 26, illustrating a first position in Figs. 8A, 9A and 10A; and a deployed position in Figs. 8B, 9B and 10B, respectively. The embodiments shown in Figs. 8A-10B all move from the first position to the deployed position by an actuation mechanism with sensor controlled initiation. This means that when a vehicle's detection system for protection during collision (e.g., a Supplemental Restraint System) identifies that a collision has started or is about to happen, a signal is sent which actuates the actuation mechanism to trigger movement of the rigid support element 26 from the first position to the deployed position in which it can support an airbag 24.

Figs. 8A-8B show an embodiment in which an electrical signal is sent by the SRS upon the sensing of a force indicating a collision in which airbag 24 should deploy. The pyrotechnic initiator 40 is triggered by the signal, which causes pretensioned spring 42 (or band or wire) to release, which moves rigid support element 26 into the deployed position shown in Fig. 8B.

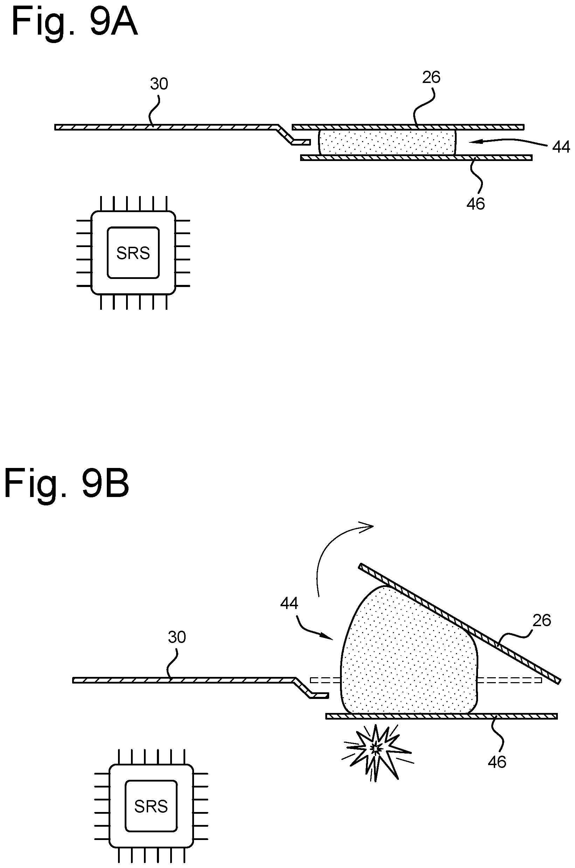

Figs. 9A-10B also use a pyrotechnic trigger for actuation, initiated by a signal from the SRS, but use one or more airbags for moving rigid support element into its deployed position. In Figs. 9A-9B, pyrotechnic initiator 40 causes airbag 44 to inflate, moving rigid support element 26 from the position shown in Fig. 9A to the position of Fig. 9B to support airbag 24. Airbag 44 is supported by plate 46, which could be a part of dashboard 30 or another component. Airbag 44 is also connected to rigid support element 26.

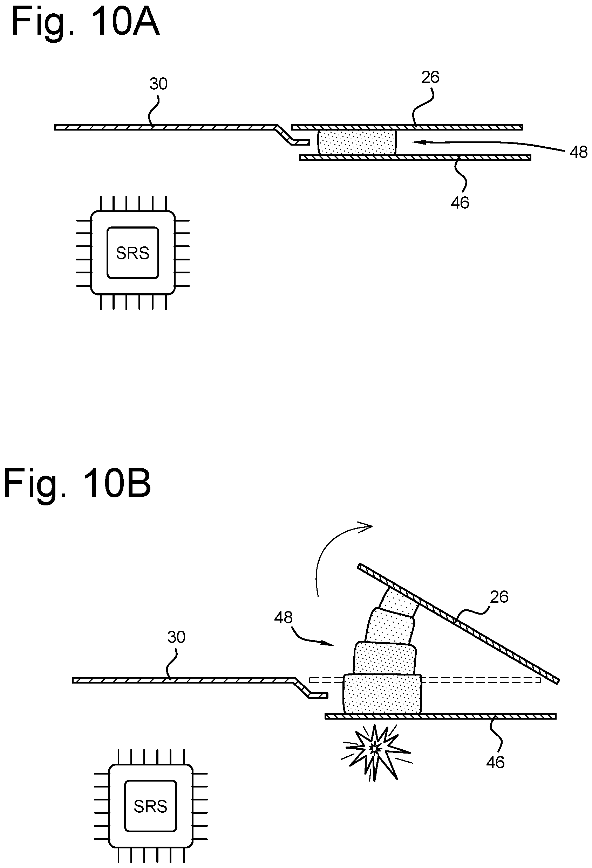

Figs. 10A-10B show a similar concept, relying on a similar technique as what previously has been referred to as pneumatic (or hydraulic) systems, using a pressurized closed vessel 48 extending between plate 46 and rigid support element 26. The vessel 48 is shown to have a decreasing size between plate 46 and rigid support element 26, which can help to ensure compact storage but also provide the necessary force to quickly deploy and support rigid support element 26 when needed.

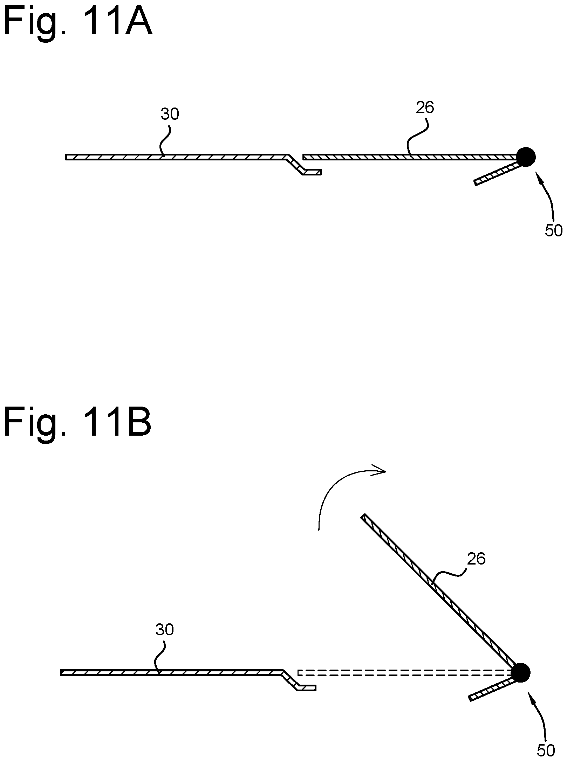

Figures 11A-13B show embodiments of connections between rigid support element and other vehicle components. Each of the embodiments could be used with any of the actuation systems or mechanisms shown and described with respect to Figs. 3A-10B.

Figs. 11A-11B show an embodiment in which rigid support element 26 is a plate or surface which moves or rotates around hinge 50. Fig. 11A shows rigid support element 26 in its first state, aligned with dashboard 30. After actuation, rigid support element 26 is moved around hinge 50 into the deployed position for supporting airbag 24, as shown in Fig. 11B.

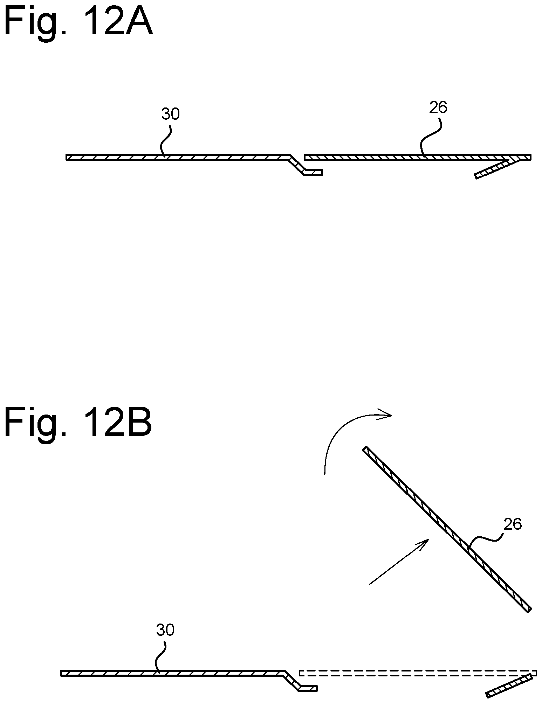

Figs. 12A-12B show an embodiment in which rigid support element 26 fully releases when deployed. The actuation mechanism (mechanical or pyrotechnic) causes rigid support element 26 to fully detach from its first state (Fig. 12A) and be pushed or launched into the deployed position shown in Fig. 12B where it can support airbag 24.

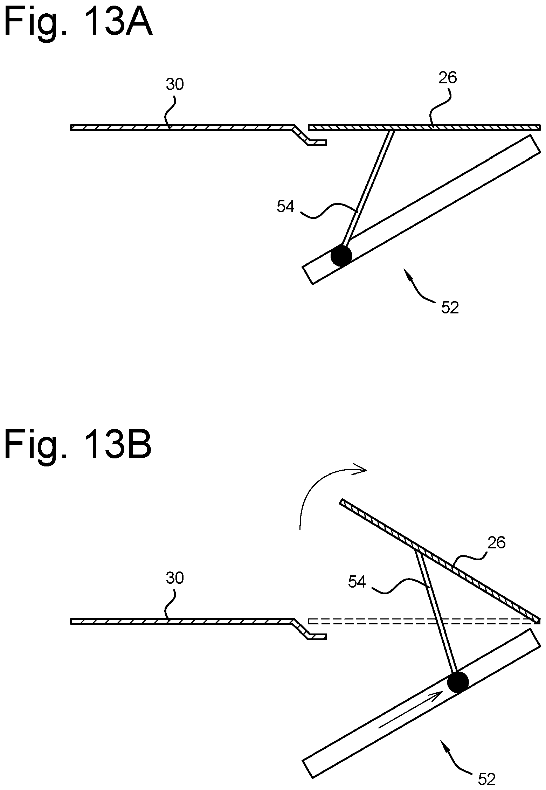

Figs. 13A-13B show an embodiment in which rigid support element 26 movement is guided by rail 52. Connecting member 54 (e.g., an arm) rotatably connects to rail 52 and rigid support element 26. Connecting member 54 is also able to slide along rail 52, thereby moving rigid support element 26 from the first position (Fig. 13A) to a deployed position (Fig. 13B).

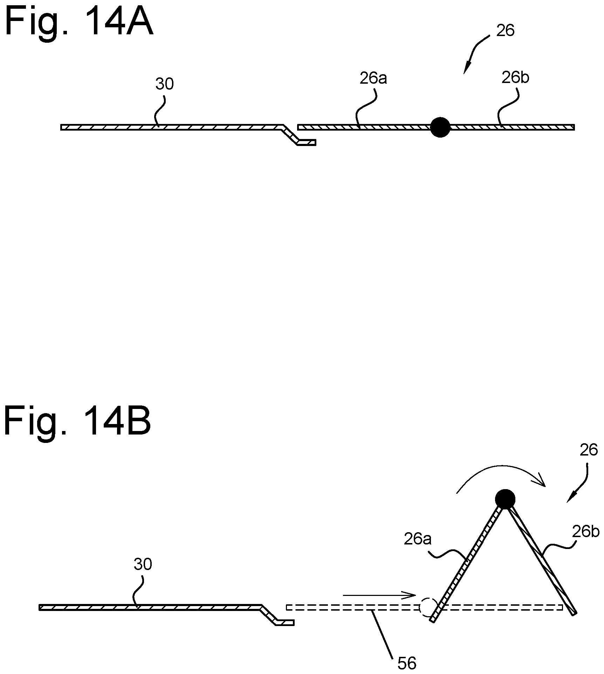

Figs. 14A-14B show an embodiment in which rigid support element 26 comprises a first portion 26a which pivotably connects to a second portion 26b. Each of first portion 26a and second portion 26b are also connected to rail 56 and at least one portion is able to slide along rail 56. In a first position (Fig. 14A), first portion 26a and second portion 26b are substantially planar, lying next to each other and aligned with dashboard 30. In a deployed position, as seen in Fig. 14B, a distal end of first portion 26a slides along rail 56 toward the connection of second portion 26b and rail 56. As the distal end of second portion 26b remains at the same position on rail 56, the movement of first portion 26a causes the connection between first portion 26a and second portion 26b to move upward, resulting in first portion 26a and second portion 26b being at an angle with respect to each other. This positions second portion 26b to support airbag 24, with first portion stabilizing and supporting the positioning of second portion 26b.

In summary, the airbag support shown and described in various embodiments herein allow for the support of a conventional airbag in an unconventional steering wheel, for example, a steering wheel in which a portion of the rim is removed. Such an unconventional steering wheel can be useful to enable better driver visibility and/or sensor systems in the vehicle such as eye tracking sensors. Using a mechanical or physical actuation mechanism can provide a simple but highly reliable way of triggering the deployment of the rigid support element from a first position in which it is integrated into the vehicle interior to a deployed position for supporting the airbag. Alternatively, current vehicle collision detection systems could be used (e.g., SRS) for triggering actuation and deployment of the rigid support element, thereby connecting to the systems deploying the airbag itself. Various physical embodiments can be used, directly or indirectly connecting the rigid support element to vehicle components such as the dashboard and/or steering column to integrate into the vehicle components and use their natural shapes and/or movements for the airbag support and components.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

For further explanation of the present disclosure, various embodiments of the present disclosure are listed below:
Embodiment 1. An airbag support for an unconventional steering wheel, the airbag support comprising: a rigid support element moveable between a first position and a deployed position where the rigid support element is positioned to support a deployed airbag; and an actuation mechanism configured to move the rigid support element from the first position to the deployed position upon actuation.
Embodiment 2. The airbag support of embodiment 1, wherein the rigid support element moves from the first position to the deployed position via a hinge.
Embodiment 3. The airbag support of any of the preceding embodiments, wherein the actuation mechanism comprises a rail and a connecting member connecting the rigid support element to the rail, wherein the connecting member is arranged to slide along the rail, thereby moving the rigid support element from the first position to the deployed position when the airbag support is actuated.
Embodiment 4. The airbag support of embodiment 1, wherein the rigid support element comprises a first portion pivotably connected to a second portion, wherein each of the first portion and the second portion are connected to a rail, and wherein in the first position, the first portion is substantially planar with the second portion, and in the deployed position, the first portion is at an angle from the second portion.
Embodiment 5. The airbag support of any of the preceding embodiments, wherein the rigid support element is aligned with a top surface of a dashboard and/or steering column of the vehicle in the first position.
Embodiment 6. The airbag support of any of the preceding embodiments, wherein the actuation mechanism is a mechanical actuation mechanism and the rigid support element is moved from the first position to the deployed position based on an initiation trigger.
Embodiment 7. The airbag support of embodiment 6, wherein the rigid support element is connected to a vehicle component, and wherein the initiation trigger is movement of the vehicle component.
Embodiment 8. The airbag support of any of embodiments 6-7, wherein the actuation mechanism comprises one or more of: a wire connected between the rigid support element and the vehicle component; an arm linking the rigid support element and the vehicle component, a portion of the vehicle component which interacts with a part of the rigid support element, a pretensioned spring, a pneumatic or hydraulic system; and wherein the initiation trigger is movement of the vehicle component causing the rigid support element to move to the deployed position.
Embodiment 9. The airbag support of any of embodiments 7-8, wherein the vehicle component is a steering column.
Embodiment 10. The airbag support of any of any of the preceding embodiments, wherein the actuation mechanism is a sensor-controlled actuation system and comprises one or more of: a pretensioned spring; a pneumatic or hydraulic system, a pyrotechnic mechanism, an airbag or a pressurized vessel.
Embodiment 11. The airbag support of any of the preceding embodiments, wherein the rigid support element is a plate.
Embodiment 12. The airbag support of any of the preceding embodiments, wherein the unconventional steering wheel comprises an interrupted rim; and wherein the rigid support element is configured, in the deployed position, to support the airbag in the interrupted portion of the rim.
Embodiment 13. An unconventional steering wheel arrangement comprising the airbag support of any of the preceding embodiments.
Embodiment 14. A vehicle comprising the unconventional steering wheel arrangement of embodiment 13.
Embodiment 15. A method of supporting an airbag deployment in a vehicle with an unconventional steering wheel, the method comprising: receiving an initiation trigger, and as a result of receiving the initiation trigger, moving a rigid support element from a first position where the rigid support element is integrated into the vehicle interior, to a deployed position where the rigid support element is positioned to support a deployed airbag.

## Claims

1. An airbag support for an unconventional steering wheel, the airbag support comprising:
a rigid support element (26) moveable between a first position and a deployed position where the rigid support element is positioned to support a deployed airbag (24); and
an actuation mechanism configured to move the rigid support element (26) from the first position to the deployed position upon actuation.

2. The airbag support of claim 1, wherein the rigid support element moves from the first position to the deployed position via a hinge (50).

3. The airbag support of any of the preceding claims, wherein the actuation mechanism comprises a rail (52) and a connecting member (54) connecting the rigid support element (26) to the rail (52), wherein the connecting member (54) is arranged to slide along the rail (54), thereby moving the rigid support element (26) from the first position to the deployed position when the airbag support is actuated.

4. The airbag support of claim 1, wherein the rigid support element (26) comprises a first portion (26a) pivotably connected to a second portion (26b), wherein each of the first portion (26a) and the second portion (26b) are connected to a rail (56), and wherein in the first position, the first portion (26a) is substantially planar with the second portion (26b), and in the deployed position, the first portion (26a) is at an angle from the second portion (26b).

5. The airbag support of any of the preceding claims, wherein the rigid support element (26) is aligned with a top surface of a dashboard (30) and/or steering column (28) of the vehicle in the first position.

6. The airbag support of any of the preceding claims, wherein the actuation mechanism is a mechanical actuation mechanism and the rigid support element (26) is moved from the first position to the deployed position based on an initiation trigger.

7. The airbag support of claim 6, wherein the rigid support element (26) is connected to a vehicle component, and wherein the initiation trigger is movement of the vehicle component.

8. The airbag support of any of claims 6-7, wherein the actuation mechanism comprises one or more of: a wire (32) connected between the rigid support element (26) and the vehicle component; an arm (34) linking the rigid support element (26) and the vehicle component, a portion (29) of the vehicle component which interacts with a part (36) of the rigid support element (26), a pretensioned spring (37), a pneumatic or hydraulic system (38); and
wherein the initiation trigger is movement of the vehicle component causing the rigid support element (26) to move to the deployed position.

9. The airbag support of any of claims 7-8, wherein the vehicle component is a steering column (28).

10. The airbag support of any of any of the preceding claims, wherein the actuation mechanism is a sensor controlled actuation system and comprises one or more of: a pretensioned spring (42); a pneumatic or hydraulic system, a pyrotechnic mechanism, an airbag (44) or a pressurized vessel.

11. The airbag support of any of the preceding claims, wherein the rigid support element (26) is a plate.

12. The airbag support of any of the preceding claims, wherein the unconventional steering wheel (20) comprises an interrupted rim (22); and wherein the rigid support element (26) is configured, in the deployed position, to support the airbag (24) in the interrupted portion of the rim.

13. An unconventional steering wheel arrangement comprising the airbag support of any of the preceding claims.

14. A vehicle comprising the unconventional steering wheel arrangement of claim 13.

15. A method of supporting an airbag deployment in a vehicle with an unconventional steering wheel (20), the method comprising:
receiving an initiation trigger, and
as a result of receiving the initiation trigger, moving a rigid support element (26) from a first position where the rigid support element is integrated into the vehicle interior, to a deployed position where the rigid support element (26) is positioned to support a deployed airbag (24).
